# EUROPEAN PATENT APPLICATION

(11) **EP 4 686 165 A1**
(43) Date of publication of application: **28.01.2026**
(21) Application number: 25191755.5
(22) Date of filing: 25.07.2025
(51) Int. Cl.: H04L 47/215, H04L 47/56, H04W 72/1268, H04W 72/543, H04W 72/566

(54) **METHOD AND APPARATUS FOR ENHANCEMENTS ON TOKEN BUCKET ALGORITHM IN LOGICAL CHANNEL PRIORITIZATION**

(30) Priority: 26.07.2024 US 202463675752 P; 19.03.2025 US 202563774138 P
(71) Applicant: HTC Corporation, Taoyuan City 330, (TW)
(72) Inventor: LEE, Yen-Yi, 330 Taoyuan City (TW)
(74) Representative: Carstens, Dirk Wilhelm

(57) **Abstract**

Various solutions for enhancements on token bucket algorithm in logical channel prioritization (LCP) are described. An apparatus may select a plurality of logical channels for an uplink (UL) grant. The apparatus may allocate resources of the UL grant to one or more of the plurality of logical channels in a decreasing priority order. Each of the one or more of the plurality of logical channels is associated with a positive number of tokens, or carries data with a remaining time of an associated packet data convergence protocol (PDCP) discard timer less than a threshold. Then, the apparatus may decrement the positive number of tokens by a total size of medium access control (MAC) service data units (SDUs) served to a corresponding logical channel of the one or more of the plurality of logical channels. After that, the apparatus may multiplex the MAC SDUs in a MAC protocol data unit (PDU) for transmission on the UL grant to a network node.

## Description

### TECHNICAL FIELD

The present disclosure is generally related to mobile communications and, more particularly, to enhancements on token bucket algorithm in logical channel prioritization (LCP) in mobile communications.

### BACKGROUND

Unless otherwise indicated herein, approaches described in this section are not prior art to the claims listed below and are not admitted as prior art by inclusion in this section.

The wireless communications network has grown exponentially over the years. A long-term evolution (LTE) system offers high peak data rates, low latency, improved system capacity, and low operating cost resulting from simplified network architecture. LTE systems, also known as the 4^{th} generation (4G) system, also provide seamless integration to older wireless networks, such as GSM, CDMA, and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). Alternatively, a wireless network may include a hybrid of 2G/3G/4G systems. In 3^{rd} generation partner project (3GPP), the next generation mobile network (NGMN) board has decided to focus the future NGMN activities on defining the end-to-end requirements for 5^{th} generation (5G) new radio (NR) systems, 5G-advanced systems, and 6G systems.

LCP is a medium access control (MAC) layer procedure that is responsible for selecting which data to transmit when the available radio resources for uplink (UL) transmission are limited. In 3GPP Release 18 for 5G NR, a priority-based token bucket algorithm is adopted for UL resource allocation in the LCP procedure, where each logical channel is associated with a priority, a prioritized bit rate (PBR), and a bucket size duration (BSD). The basic idea is to meet the PBR for all selected logical channels in a decreasing priority order based on whether there are tokens available in the bucket of each logical channel. After the PBR of all selected logical channels is met, if any UL resource remains, all selected logical channels would be served in a strict decreasing priority order, regardless of the number of tokens in their buckets. Accordingly, the priority-based token bucket algorithm may achieve PBR-based fairness.

However, there may be some issues with the priority-based token bucket algorithm. For example, the priority-based token bucket algorithm does not take into account the transmission requirement of delay-critical data in logical channels. As a result, in cases where there is delay-critical data in a logical channel without a positive number of tokens in the bucket, the logical channel will not be allocated resources to transmit its delay-critical data to meet the delay requirements, even if it is a logical channel of a higher priority order. Furthermore, in the allocation of remaining resources, the logical channel(s) without delay-critical data will be allocated first than the logical channel(s) with delay-critical data, as long as the logical channel(s) without delay-critical data has higher priority than that of the logical channel(s) with delay-critical data. That is, the legacy LCP procedure may not ensure the in-time transmission of the delay-critical data, and this is detrimental to applications or services that require low-latency communication, such as extended reality (XR), remote control and teleoperation (e.g., telesurgery), industrial automation, vehicle-to-everything (V2X) applications.

Therefore, there is a need to provide proper schemes to address these issues.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is proposing schemes, concepts, designs, systems, methods, and/or apparatus pertaining to enhancements on token bucket algorithm in LCP. It is believed that the above-described issue would be avoided or otherwise alleviated by implementing one or more of the proposed schemes described herein.

In one aspect, an apparatus may comprise a transceiver that, during operation, wirelessly communicates with a network node. The apparatus may also comprise a processor communicatively coupled to the transceiver. The processor, during operation, may perform operations comprising selecting a plurality of logical channels for an UL grant. The processor may also perform operations comprising allocating resources of the UL grant to one or more of the plurality of logical channels in a decreasing priority order, wherein each of the one or more of the plurality of logical channels is associated with a positive number of tokens, or carries data with a remaining time of an associated packet data convergence protocol (PDCP) discard timer less than a threshold. The processor may further perform operations comprising decrementing the positive number of tokens by a total size of MAC service data units (SDUs) served to a corresponding logical channel of the one or more of the plurality of logical channels. The processor may further perform operations comprising multiplexing the MAC SDUs in a MAC protocol data unit (PDU) for transmission on the UL grant to the network node via the transceiver.

In one aspect, a network node may comprise a transceiver which, during operation, wirelessly communicates with an apparatus. The network node may also comprise a processor communicatively coupled to the transceiver. The processor, during operation, may perform operations comprising transmitting, via the transceiver, a radio resource control (RRC) signaling to the apparatus, wherein the RRC signaling configures a threshold. The processor may further perform operations comprising receiving, via the transceiver, a MAC PDU with a plurality of MAC SDUs multiplexed therein from the apparatus, wherein the plurality of MAC SDUs are served to one or more logical channels in the apparatus, each of the one or more logical channels is associated with a positive number of tokens or carries data with a remaining time of an associated PDCP discard timer less than the threshold.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (IoT) and Narrow Band Internet of Things (NB-IoT), Industrial Internet of Things (lloT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale, as some components may be shown to be out of proportion than the size in actual implementation in order to clearly illustrate the concept of the present disclosure.
FIG. 1 is a diagram depicting an example scenario of the priority-based token bucket algorithm for UL resource allocation in the LCP procedure under the current 5G NR framework.
FIG. 2 is a diagram depicting an example scenario of a communication environment in which various solutions and schemes in accordance with the present disclosure may be implemented.
FIG. 3 is a diagram depicting an example scenario of the LCP procedure in accordance with an implementation of the present disclosure.
FIG. 4 is a diagram depicting an example scenario of the enhanced token bucket algorithm for UL resource allocation in the LCP procedure in accordance with an implementation of the present disclosure.
FIG. 5 is a block diagram of an example communication system in accordance with an implementation of the present disclosure.
FIG. 6 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes, and/or solutions pertaining to enhancements on token bucket algorithm in LCP. According to the present disclosure, a number of possible solutions may be implemented separately or jointly. That is, although these possible solutions may be described below separately, two or more of these possible solutions may be implemented in one combination or another.

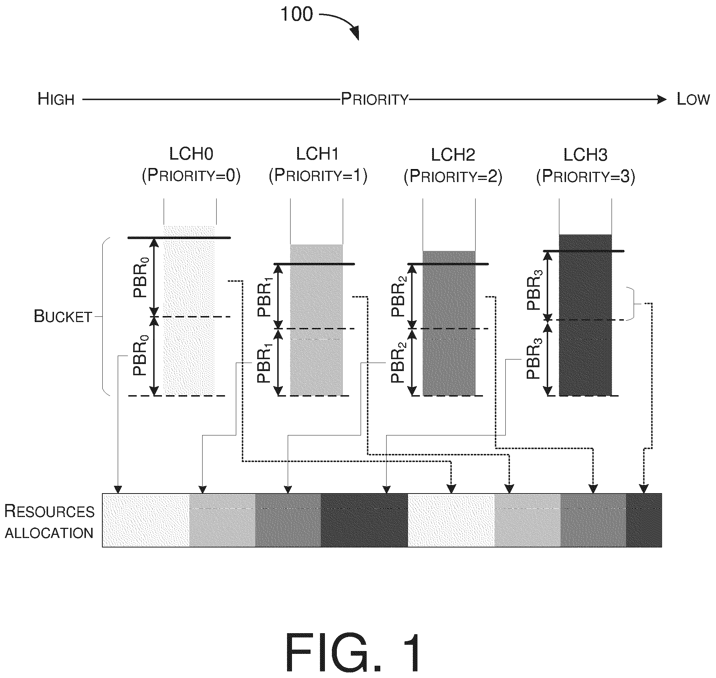

In the current 5G NR framework for the LCP procedure, each logical channel is associated with a priority, a PBR, and a BSD, where the number of tokens (denoted as Bj) in the bucket of each logical channel is initialized to zero when the logical channels are established. Then, for each logical channel, the MAC entity increments Bj by the product PBR × T before every instance of the LCP procedure, where T is the time elapsed since Bj was last incremented. If the value of Bj is greater than the bucket size (i.e., PBR × BSD), Bj is set to the bucket size. FIG. 1 illustrates an example scenario 100 of the priority-based token bucket algorithm for UL resource allocation in the LCP procedure under the current 5G NR framework. As shown in FIG. 1, each logical channel is configured with a priority, and a lower priority value indicates a higher priority (i.e., the priority of value=0 is the highest and the priority of value=3 is the lowest). After selecting logical channels for an UL grant, all selected logical channels with Bj > 0 are allocated resources in a decreasing priority order to meet the PBRs for all selected logical channels. After the resource allocation, Bj of each logical channel is decremented by the total size of MAC SDUs served to the logical channel j. Then, if any UL resource remains, all selected logical channels are served in a strict decreasing priority order (regardless of the value of Bj) until either the data for that logical channel or the UL grant is exhausted, whichever comes first. It should be noted that, in the present disclosure, the selection of logical channels in the LCP procedure is performed by the rules specified in 3GPP standards, and a detailed description thereof is omitted herein for brevity.

Although the priority-based token bucket algorithm may achieve PBR-based fairness, it does not take into account the transmission requirement of delay-critical data in logical channels. Consequently, in cases where there is delay-critical data in a logical channel without a positive number of tokens in the bucket, the legacy LCP procedure may not ensure the in-time transmission of the delay-critical data. An example that the number of tokens of a logical channel becomes negative is when Bj > 0 and Bj minus the size of pending radio link control (RLC) SDU < 0. Since the UE should not segment an RLC SDU if the whole SDU fits into the remaining resources (there is sufficient UL grant) of the associated MAC entity, Bj will become negative to avoid segmentation after the packet build of this pending RLC SDU. This example also applies to a partially transmitted SDU or a retransmitted RLC PDU. Once the Bj of a logical channel becomes negative, the logical channel may not be allocated resources if there is not enough time for Bj to come up to a positive number before the resource allocation for the next UL grant, despite there being delay-critical data queueing to be transmitted in this logical channel.

In view of the above, the present disclosure proposes a number of schemes pertaining to enhancements on token bucket algorithm in LCP. According to the schemes of the present disclosure, new logical channel (LCH) parameter(s) (e.g. a threshold) may be introduced in the LogicalChannelConfig information element (IE), which enhances the token bucket algorithm in way that the UE may allocate resources to a logical channel with data whose remaining time of an associated PDCP discard timer being less than the threshold even when the logical channel does not have a positive number of tokens (i.e., Bj ≤ 0). More specifically, the newly introduced LCH parameter(s) is/are used to prioritize the resource allocation to logical channels with data having tight remaining time of PDCP discard timer. Accordingly, by applying the schemes of the present disclosure, logical channels with data having tight remaining time of PDCP discard timer will be allowed for UL resource allocation regardless of the number of tokens they have, which allows the delay requirements to be met for the applications/services that require low-latency communication.

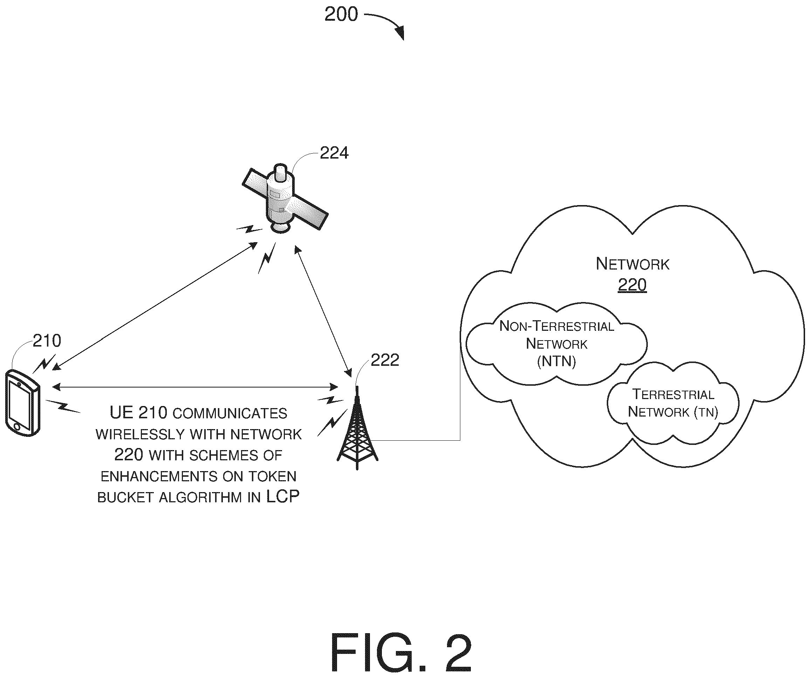

FIG. 2 illustrates an example scenario 200 of a communication environment in which various solutions and schemes in accordance with the present disclosure may be implemented. Scenario 200 involves a UE 210 in wireless communication with a network 220 (e.g., a wireless network including a non-terrestrial network (NTN) and a TN) via at least a terrestrial network node 222 (e.g., a base station (BS) such as an eNB, a gNB, or a transmission/reception point (TRP)) and/or at least a non-terrestrial network node 224 (e.g., a satellite). For example, the terrestrial network node 222 may form a TN serving cell for wireless communication with the UE 210, or the terrestrial network node 222 and the non-terrestrial network node 224 may form an NTN serving cell for wireless communication with the UE 210. In some implementations, the network 220 may be a 4G/5G/B5G/6G network, and the UE 210 may be a smartphone, a tablet computer, a laptop computer, or a notebook computer. Alternatively, the network 220 may be an IoT/ NB-loT/lloT network, and the UE 210 may be an loT device such as an NB-loT UE or an enhanced machine-type communication (eMTC) UE (e.g., a bandwidth reduced low complexity (BL) UE or a coverage enhancement (CE) UE). In such communication environment, the UE 210, the network 220, the terrestrial network node 222, and/or the non-terrestrial network node 224 may implement various schemes pertaining to enhancements on token bucket algorithm in LCP in accordance with the present disclosure, as described below. It is noteworthy that, while the various proposed schemes may be individually or separately described below, in actual implementations, some or all of the proposed schemes may be utilized or otherwise implemented jointly. Of course, each of the proposed schemes may be utilized or otherwise implemented individually or separately.

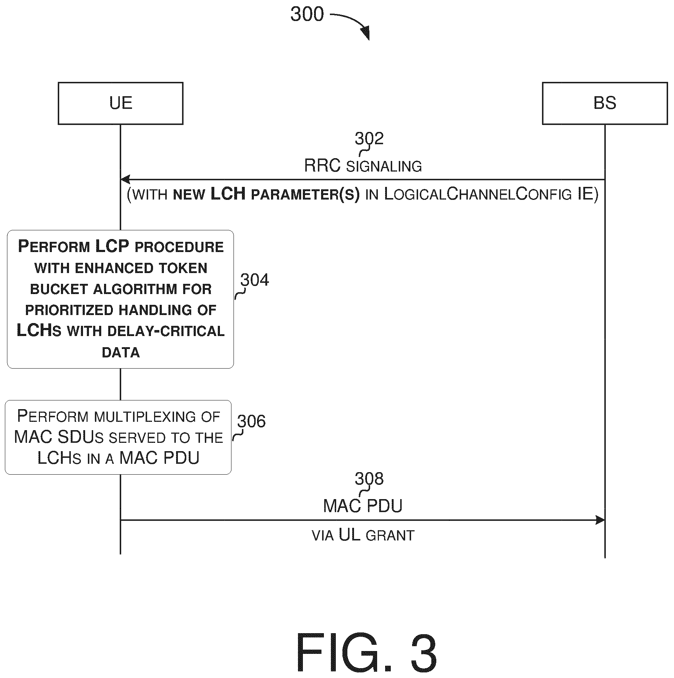

FIG. 3 illustrates an example scenario 300 of the LCP procedure in accordance with an implementation of the present disclosure. In step 302, the UE receives a radio resource control (RRC) signaling from the BS. Specifically, the RRC signaling includes the configuration of logical channels for the UE. The configuration may be contained in a LogicalChannelConfig information element (IE) in the RRC signaling. The LogicalChannelConfig IE may include legacy LCH parameters, such as a logical channel priority, a PBR, and a BSD for each logical channel, where the logical channel priority, the PBR, and the BSD may be used for UL resource allocation. Specifically, the data of a logical channel is associated with a discard timer (e.g., PDCP discardTimer), and if the remaining time of the discard timer is less than a remainingTimeThreshold or a threshold on remaining time for triggering a delay status reporting (DSR) for the corresponding logical channel within a logical channel group (LCG), which can be configured in a MAC-CellGroupConfig IE, the data is considered as delay-critical data. If the data does not get transmitted before the discard timer expires, then the data is discarded. Furthermore, the LogicalChannelConfig IE may include new LCH parameter(s) (e.g. an independent per-LCH threshold) to prioritize the resource allocation to logical channels with data whose remaining time of the PDCP discard timer being less than the threshold. In step 304, the UE performs the LCP procedure with enhanced token bucket algorithm for prioritized handling of logical channels with data whose remaining time of the PDCP discard timer being less than the threshold, as will be described in detail in the following embodiments. Specifically, the LCP procedure is performed based on UL resource allocation for a new transmission with an UL grant (e.g., a configured grant received via the same or different RRC signaling, or a dynamic grant received via a downlink control information (DCI)), and the UL resource allocation is handled with the enhanced token bucket algorithm which prioritizes logical channels with data whose remaining time of the PDCP discard timer being less than the threshold. In step 306, the UE multiplexes the MAC SDUs served to the logical channels in a MAC PDU. Then, in step 308, the MAC PDU is passed down to the Physical Layer (or called Layer-1 (L1)) through a transport channel for transmission on the UL grant to the BS.

Under a first proposed scheme of the present disclosure, a new LCH parameter (e.g., tokenCritical, which can be a Boolean parameter) may be added in the IE LogicalChannelConfig IE. When there is delay-critical data queued in a selected logical channel j with tokenCritical=TRUE, the resources may be allocated to the selected logical channel j until either the delay-critical data for this logical channel or the UL grant is exhausted, whichever comes first. That is, the UE may allocate resources with a size larger than Bj to the selected logical channel j with tokenCritical=TRUE, even if the resources required to transmit all delay-critical data queued therein are of size larger than Bj. Alternatively, when tokenCritical=FALSE, the UE may allocate resources to the selected logical channel j according to the legacy LCP procedure, even if there is delay-critical data queued in the selected logical channel j.

Under a second proposed scheme of the present disclosure, a new LCH parameter (e.g., tokenCriticalLimit, which can be an ENUMERATED size parameter) may be added in the LogicalChannelConfig IE. When there is delay-critical data queued in a selected logical channel j, the UE may allocate resources with a size no larger than tokenCriticalLimit to the selected logical channel j. That is, UE may allocate resources with a size larger than Bj but not larger than tokenCriticalLimit to the selected logical channel j, when there is delay-critical data queued in the selected logical channel j. This way, more delay-critical data queued in the selected logical channel j may be transmitted.

Under a third proposed scheme of the present disclosure, the UE may first allocate resources to the selected logical channels according to legacy LCP procedure (i.e., logical channels with Bj > 0 are allocated resources in a decreasing priority order), and if any resources remain, the remaining resources may be first allocated to logical channels with data whose remaining time of the PDCP discard timer being less than a threshold in a decreasing priority order among these logical channels (regardless of the value of Bj) until either the delay-critical data for that logical channel or the UL grant is exhausted, whichever comes first. After that, if any resources still remain, those remaining resources may be allocated to other logical channels in a decreasing priority order among these logical channels (regardless of the value of Bj) until either the data for that logical channel or the UL grant is exhausted, whichever comes first.

Under a fourth proposed scheme of the present disclosure, a threshold may be introduced/used to prioritize the resource allocation to logical channels with data whose remaining time of the PDCP discard timer being less than the threshold. When a new transmission is performed, the MAC entity of the UE may allocate resources in a decreasing priority order to: (i) logical channels with Bj > 0, and (ii) logical channels applied with additional LCH priority (i.e., the remaining time of buffered data being less than the threshold). It is noteworthy that the logical channels applied with additional LCH priority may have negative Bj (Bj < 0) or zero Bj (Bj = 0).

In some implementations, the remaining time of the buffered data may be the remaining time of running PDCP discardTimer of the buffered data.

In some implementations, the remaining time of the buffered data may be the smallest remaining time of running PDCP discardTimers among all the PDCP SDUs buffered for the logical channel that have not been transmitted in any MAC PDU.

In some implementations, the remaining time of buffered data may be the smallest remaining value of running PDCP discardTimers of the PDCP SDUs among all the UL data available for transmission in the logical channel.

In some implementations, the threshold may be an independent per-LCH remaining time threshold (e.g., called criticalRemainingTimeThreshold or priorityAdjustmentThreshold), i.e., a remaining time threshold configured for a logical channel. More specifically, this threshold is more (or less) stringent, or less than the threshold that is used to determine whether data of a logical channel is delay-critical or not (i.e., criticalRemainingTimeThreshold or priorityAdjustmentThreshold < remainingTimeThreshold).

In some implementations, the threshold may be configured from the network to the UE through an RRC message.

In some implementations, the threshold may be configured in the LogicalChannelConfig IE.

In some implementations, the threshold may be configured in the MAC-CellGroupConfig IE (e.g., it can be the remainingTimeThreshold or a threshold on remaining time for triggering a DSR for the corresponding logical channel within an LCG, which can also be used to determine whether data of a logical channel within an LCG is delay-critical or not).

In some implementations, the additional LCH priority may be applied for the logical channel when there is data buffered in the logical channel with remaining time less than the threshold.

In some implementations, the additional LCH priority may be applied for the logical channel when the smallest remaining time of the running PDCP discardTimers of the PDCP SDU among all the UL data available for transmission in the logical channel is less than the threshold.

In some implementations, the additional LCH priority may be applied for the logical channel when the smallest remaining time of the running PDCP discardTimers among all the PDCP SDUs buffered for the logical channel that have not been transmitted in any MAC PDU and have not been reported as data volume in a delay status reporting (DSR) MAC control element (CE) becomes below the threshold.

In some implementations, the threshold may be the threshold on remaining time for triggering a DSR for the logical channel within a MAC-CellGroupConfig IE (i.e., remaining Time Threshold or a threshold on remaining time for triggering a DSR for the corresponding logical channel within a LCG, which can also be used to determine whether data of a logical channel is delay-critical or not).

In some implementations, the data in the logical channel applied with additional LCH priority may be determined as LCH priority-adjusted data, and the rules for resource allocation may be adjusted as follows. When a new transmission is performed, the MAC entity of the UE may allocate resources in a decreasing priority order to: (i) logical channels with Bj > 0, and (ii) logical channels with LCH priority-adjusted data whose remaining time is less than the threshold.

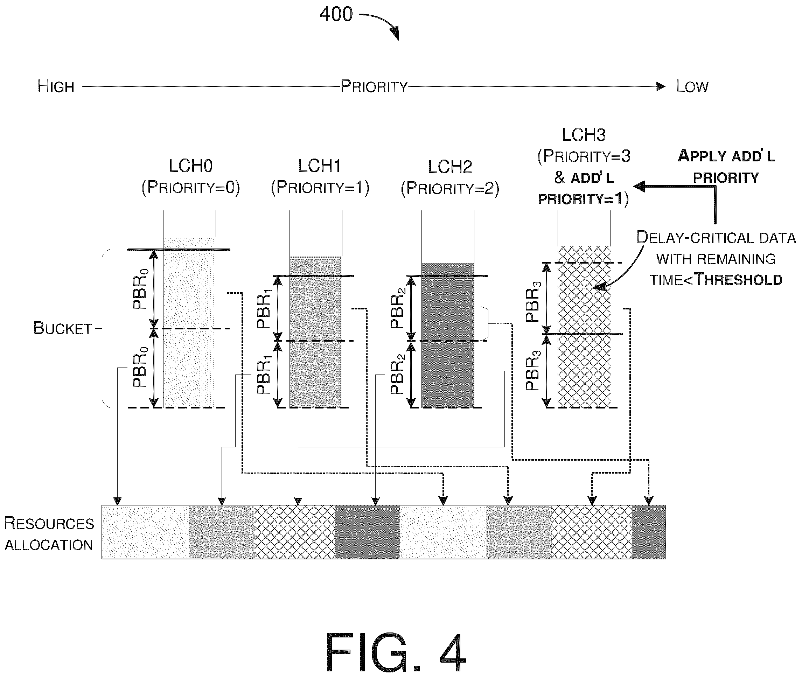

FIG. 4 illustrates an example scenario 400 of the enhanced token bucket algorithm for UL resource allocation in the LCP procedure in accordance with an implementation of the present disclosure. As shown in FIG. 4, each logical channel is configured with a priority, e.g., the priority of value=0 is the highest priority and the priority of value=3 is the lowest priority, where the logical channel with priority=3 has delay-critical data buffered therein. Specifically, the logical channel with priority=3 is then applied with an additional priority=1 which replaces/overrides the original priority=3, when the (smallest) remaining time of running PDCP discardTimers among all the PDCP SDUs buffered for the logical channel is less than the newly introduced threshold (e.g., critical Remaining Time Threshold or priorityAdjustmentThreshold). That is, the additional priority moves the logical channel up in the priority order, and as long as the logical channel is applied with the additional priority and the (smallest) remaining time of buffered data is less than the threshold, the UE may allocate resources to this logical channel even if the logical channel has a non-positive number of tokens (i.e., Bj ≤ 0).

### Illustrative Implementations

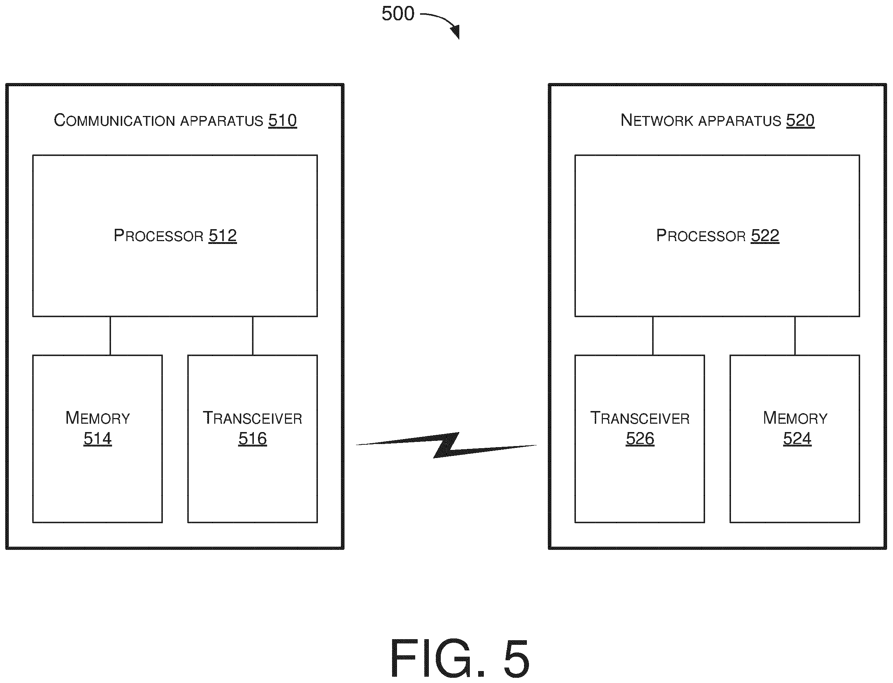

FIG. 5 illustrates an example communication system 500 having an example communication apparatus 510 and an example network apparatus 520 in accordance with an implementation of the present disclosure. Each of communication apparatus 510 and network apparatus 520 may perform various functions to implement schemes, techniques, processes, and methods described herein pertaining to enhancements on token bucket algorithm in LCP, including scenarios/schemes described above as well as process 600 described below.

Communication apparatus 510 may be a part of an electronic apparatus, which may be a dual-steer device containing one or more UEs such as a portable or mobile apparatus, a wearable apparatus, a wireless communication apparatus, or a computing apparatus. For instance, communication apparatus 510 may be implemented in a smartphone, a smartwatch, a personal digital assistant, an electronic control unit (ECU) in a vehicle, a digital camera, or a computing equipment such as a tablet computer, a laptop computer, or a notebook computer. Communication apparatus 510 may also be a part of a machine type apparatus, which may be an loT, NB-loT, eMTC, IIoT UE, such as an immobile or a stationary apparatus, a home apparatus, a roadside unit (RSU), a wire communication apparatus, or a computing apparatus. For instance, communication apparatus 510 may be implemented in a smart thermostat, a smart fridge, a smart door lock, a wireless speaker, or a home control center. Alternatively, communication apparatus 510 may be implemented in the form of one or more integrated-circuit (IC) chips, such as, for example and without limitation, one or more single-core processors, one or more multi-core processors, one or more reduced-instruction-set computing (RISC) processors, or one or more complex-instruction-set-computing (CISC) processors. Communication apparatus 510 may include at least some of those components shown in FIG. 5, such as a processor 512, for example. Communication apparatus 510 may further include one or more other components not pertinent to the proposed schemes of the present disclosure (e.g., internal power supply, display device and/or user interface device), and, thus, such component(s) of communication apparatus 510 are neither shown in FIG. 5 nor described below in the interest of simplicity and brevity.

Network apparatus 520 may be a part of an electronic apparatus, which may be a network node such as a satellite, a BS, a small cell, a router, or a gateway of a 4G/5G/B5G/6G, NR, loT, NB-loT, or IIoT network. Alternatively, network apparatus 520 may be implemented in the form of one or more IC chips, such as, for example and without limitation, one or more single-core processors, one or more multi-core processors, or one or more RISC or CISC processors. Network apparatus 520 may include at least some of those components shown in FIG. 5, such as a processor 522, for example. Network apparatus 520 may further include one or more other components not pertinent to the proposed scheme of the present disclosure (e.g., internal power supply, display device and/or user interface device), and, thus, such component(s) of network apparatus 520 are neither shown in FIG. 5 nor described below in the interest of simplicity and brevity.

In one aspect, each of processor 512 and processor 522 may be implemented in the form of one or more single-core processors, one or more multi-core processors, or one or more CISC processors. That is, even though a singular term "a processor" is used herein to refer to processor 512 and processor 522, each of processor 512 and processor 522 may include multiple processors in some implementations and a single processor in other implementations in accordance with the present disclosure. In another aspect, each of processor 512 and processor 522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 512 and processor 522 is a special-purpose machine specifically designed, arranged and configured to perform specific tasks, including the enhanced LCP procedure, in a device (e.g., as represented by communication apparatus 510) and a network node (e.g., as represented by network apparatus 520) in accordance with various implementations of the present disclosure.

In some implementations, communication apparatus 510 may also include a transceiver 516 coupled to processor 512 and capable of wirelessly transmitting and receiving data. In some implementations, transceiver 516 may be capable of wirelessly communicating with different types of UEs and/or wireless networks of different RATs. In some implementations, transceiver 516 may be equipped with a plurality of antenna ports (not shown) such as, for example, four antenna ports. That is, transceiver 516 may be equipped with multiple transmit antennas and multiple receive antennas for multiple-input multiple-output (MIMO) wireless communications. In some implementations, network apparatus 520 may also include a transceiver 526 coupled to processor 522. Transceiver 526 may include a transceiver capable of wirelessly transmitting and receiving data. In some implementations, transceiver 526 may be capable of wirelessly communicating with different types of UEs of different RATs. In some implementations, transceiver 526 may be equipped with a plurality of antenna ports (not shown) such as, for example, four antenna ports. That is, transceiver 526 may be equipped with multiple transmit antennas and multiple receive antennas for MIMO wireless communications.

In some implementations, communication apparatus 510 may further include a memory 514 coupled to processor 512 and capable of being accessed by processor 512 and storing data therein. In some implementations, network apparatus 520 may further include a memory 524 coupled to processor 522 and capable of being accessed by processor 522 and storing data therein. Each of memory 514 and memory 524 may include a type of random-access memory (RAM) such as dynamic RAM (DRAM), static RAM (SRAM), thyristor RAM (TRAM), and/or zero-capacitor RAM (Z-RAM). Alternatively, or additionally, each of memory 514 and memory 524 may include a type of read-only memory (ROM) such as mask ROM, programmable ROM (PROM), erasable programmable ROM (EPROM), and/or electrically erasable programmable ROM (EEPROM). Alternatively, or additionally, each of memory 514 and memory 524 may include a type of non-volatile random-access memory (NVRAM) such as flash memory, solid-state memory, ferroelectric RAM (FeRAM), magnetoresistive RAM (MRAM), and/or phase-change memory.

Each of communication apparatus 510 and network apparatus 520 may be a communication entity capable of communicating with each other using various proposed schemes in accordance with the present disclosure. For illustrative purposes and without limitation, a description of capabilities of communication apparatus 510, as a UE, and network apparatus 520, as a network node (e.g., BS), is provided below with process 600.

### Illustrative Processes

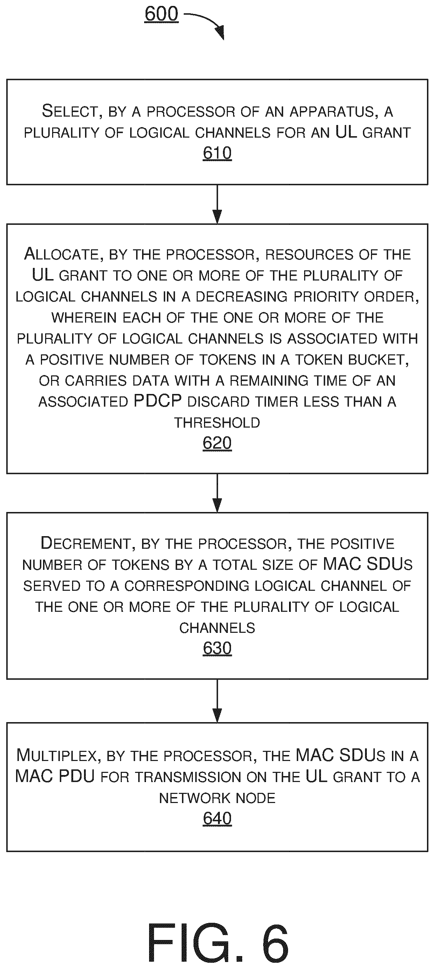

FIG. 6 illustrates an example process 600 in accordance with an implementation of the present disclosure. Process 600 may be an example implementation of above scenarios/schemes, whether partially or completely, with respect to enhancements on token bucket algorithm in LCP. Process 600 may represent an aspect of implementation of features of communication apparatus 510. Process 600 may include one or more operations, actions, or functions as illustrated by one or more of blocks 610 to 640. Although illustrated as discrete blocks, various blocks of process 600 may be divided into additional blocks, combined into fewer blocks, or eliminated, depending on the desired implementation. Moreover, the blocks of process 600 may be executed in the order shown in FIG. 6 or, alternatively in a different order. Process 600 may be implemented by or in communication apparatus 510 or any suitable UE or machine type device. Solely for illustrative purposes and without limiting the scope, process 600 is described below in the context of communication apparatus 510, as a UE, and network apparatus 520, as a network node (e.g., a BS such as gNB). Process 600 may begin at block 610.

At block 610, process 600 may involve processor 512 of communication apparatus 510, selecting a plurality of logical channels for an UL grant. Process 600 may proceed from block 610 to block 620.

At block 620, process 600 may involve processor 512 allocating resources of the UL grant to one or more of the plurality of logical channels in a decreasing priority order, wherein each of the one or more of the plurality of logical channels is associated with a positive number of tokens, or carries data with a remaining time of an associated PDCP discard timer less than a threshold (e.g., called priorityAdjustmentThreshold). Process 600 may proceed from block 620 to block 630.

At block 630, process 600 may involve processor 512 decrementing the positive number of tokens by a total size of MAC SDUs served to a corresponding logical channel of the one or more of the plurality of logical channels. Process 600 may proceed from block 630 to block 640.

At block 640, process 600 may involve processor 512 multiplexing the MAC SDUs in a MAC PDU for transmission on the UL grant to network apparatus 520 via transceiver 516.

In some implementations, at least one of the one or more of the plurality of logical channels, that carries data with the associated PDCP discard timer less than the threshold may be associated with a non-positive number of tokens.

In some implementations, the additional LCH priority may be higher than a priority configured in a LogicalChannelConfig IE of an RRC signaling received from network apparatus 520.

In some implementations, the additional LCH priority may be applied to at least one of the one or more of the plurality of logical channels in an event that the remaining time of the PDCP discard timer associated with the data is less than the threshold.

In some implementations, the threshold may be an independent per-LCH remaining time threshold.

In some implementations, the threshold may be configured in a LogicalChannelConfig IE of an RRC signaling received from network apparatus 520.

In some implementations, the threshold may be used on the remaining time for triggering a DSR for the corresponding logical channel within an LCG.

In some implementations, the threshold may be configured in a MAC-CellGroupConfig IE of an RRC signaling received from network apparatus 520.

In some implementations, the remaining time may be a smallest remaining time of running PDCP discard timers among all PDCP SDUs buffered for the corresponding logical channel that have not been transmitted in any MAC PDU.

In some implementations, the remaining time may be a smallest remaining time of running PDCP discard timers of PDCP SDUs among all UL data available for transmission in the corresponding logical channel.

In light of the above-described embodiments, it is noteworthy that, by applying the schemes of the present disclosure, the token bucket algorithm used in the LCP procedure is enhanced with new LCH parameter(s) (e.g., called criticalRemainingTimeThreshold or priorityAdjustmentThreshold) to ensure that logical channels carrying data with a remaining time of an associated PDCP discard timer less than the threshold configured by the new LCH parameter(s) are qualified for UL resource allocation regardless of the priority order of the logical channels, which allows the delay requirements to be met for the applications/services that require low-latency communication. Accordingly, the LCP procedure with the enhanced token bucket algorithm may provide better support for low-latency services, such as XR services.

### Additional Notes

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. An apparatus, comprising:
a transceiver which, during operation, wirelessly communicates with a network node; and
a processor communicatively coupled to the transceiver such that, during operation, the processor performs operations comprising:
selecting a plurality of logical channels for an uplink (UL) grant;
allocating resources of the UL grant to one or more of the plurality of logical channels in a decreasing priority order, wherein each of the one or more of the plurality of logical channels is associated with a positive number of tokens or carries data with a remaining time of an associated packet data convergence protocol (PDCP) discard timer less than a threshold;
decrementing the positive number of tokens by a total size of medium access control (MAC) service data units (SDUs) served to a corresponding logical channel of the one or more of the plurality of logical channels; and
multiplexing the MAC SDUs in a MAC protocol data unit (PDU) for transmission on the UL grant to the network node via the transceiver.

2. The apparatus of Claim 1, wherein the threshold is used on the remaining time for triggering a delay status reporting (DSR) for the corresponding logical channel within a logical channel group (LCG).

3. The apparatus of Claim 1, wherein the threshold is configured in a MAC-CellGroupConfig information element (IE) of a radio resource control (RRC) signaling received from the network node.

4. The apparatus of Claim 1, wherein the threshold is an independent per-logical channel (LCH) remaining time threshold.

5. The apparatus of Claim 1, wherein the threshold is configured in a LogicalChannelConfig information element (IE) of a radio resource control (RRC) signaling received from the network node.

6. The apparatus of Claim 1, wherein an additional logical channel (LCH) priority is applied to at least one of the one or more of the plurality of logical channels in an event that the remaining time of the PDCP discard timer associated with the data is less than the threshold.

7. The apparatus of Claim 6, wherein the additional LCH priority is higher than a priority configured in a LogicalChannelConfig information element (IE) of a radio resource control (RRC) signaling received from the network node.

8. The apparatus of Claim 1, wherein the remaining time is a smallest remaining time of running PDCP discard timers among all PDCP SDUs buffered for the corresponding logical channel that have not been transmitted in any MAC PDU.

9. The apparatus of Claim 1, wherein the remaining time is a smallest remaining time of running PDCP discard timers of PDCP SDUs among all UL data available for transmission in the corresponding logical channel.

10. The apparatus of Claim 1, wherein at least one of the one or more of the plurality of logical channels, that carries data with the associated PDCP discard timer less than the threshold, is associated with a non-positive number of tokens.

11. A network node, comprising:
a transceiver which, during operation, wirelessly communicates with an apparatus; and
a processor communicatively coupled to the transceiver such that, during operation, the processor performs operations comprising:
transmitting, via the transceiver, a radio resource control (RRC) signaling to the apparatus, wherein the RRC signaling configures a threshold; and
receiving, via the transceiver, a medium access control (MAC) protocol data unit (PDU) with a plurality of MAC service data units (SDUs) multiplexed therein from the apparatus, wherein the plurality of MAC SDUs are served to one or more logical channels in the apparatus, each of the one or more logical channels is associated with a positive number of tokens or carries data with a remaining time of an associated packet data convergence protocol (PDCP) discard timer less than the threshold.

12. The network node of Claim 11, wherein the threshold is configured in a MAC-CellGroupConfig information element (IE) or a LogicalChannelConfig IE of the RRC signaling.

13. The network node of Claim 11, wherein an additional logical channel (LCH) priority is applied to at least one of the one or more logical channels in an event that the remaining time of the PDCP discard timer associated with the data is less than the threshold.

14. The network node of Claim 11, wherein the remaining time is a smallest remaining time of running PDCP discard timers among all PDCP SDUs buffered for a corresponding logical channel of the one or more logical channels that have not been transmitted in any MAC PDU.

15. The network node of Claim 11, wherein at least one of the one or more logical channels, that carries data with the associated PDCP discard timer less than the threshold, is associated with a non-positive number of tokens.
